# EUROPEAN PATENT APPLICATION

(11) **EP 1 370 092 A1**
(43) Date of publication of application: **10.12.2003**
(21) Application number: 02705242.2
(22) Date of filing: 15.03.2002
(51) Int. Cl.: H04N 9/64, H04N 1/46, H04N 1/60, G06T 1/00, G09G 5/00

(54) **ENVIRONMENT-ADAPTIVE IMAGE DISPLAY SYSTEM, INFORMATION STORAGE MEDIUM, AND IMAGE PROCESSING METHOD**

(30) Priority: 16.03.2001 JP 2001075377; 06.07.2001 JP 2001206474
(71) Applicant: SEIKO EPSON CORPORATION, Shinjuku-ku, Tokyo 163-0811 (JP)
(72) Inventor: MATSUDA, Hideki, c/o SEIKO EPSON CORPORATION, Suwa-shi, Nagano 392-8502 (JP)
(74) Representative: Hoffmann, Eckart, Dipl.-Ing.
(86) International application number: JP0202484
(87) International publication number: WO02076106

(57) **Abstract**

To provide an environment-compliant image display system, information storage medium, and image processing method capable of accurately reproducing the color appearances of an image, an information generation section (160) that uses a calculation method based on an appearance model is used to generate a 3D-LUT in a LUT storage section (122), based on viewing environment information from a color-light sensor (60) that detects the viewing environment, device color gamut information, and corresponding-color information of the sRGB standard, and a projector color conversion section (120) is used to convert an image signal based on the 3D-LUT.

## Description

### Technical Field

The present invention relates to an environment-compliant image display system, an information storage medium, and an image processing method.

### Background of Art

An environment-compliant image display system has been proposed for detecting a viewing environment that is affected by ambient light, and correcting an image from consideration of the viewing environment.

When considering the color appearances of an image, it is necessary to consider overall changes, which include not only changes in artificial light but also changes in the way in which eyes adapt to the viewing environment.

There are various appearance models such as CIECAM97s which are specified as algorithms that take such overall changes into account.

When an appearance model is used, however, there is an increase in the quantity of calculation required so that it is difficult to use in practice, and examples of using original methods during the reproduction of image colors have been proposed (such as in Japanese Patent Application Laid-Open No. 2000-113174).

With Japanese Patent Application Laid-Open No. 2000-113174, the objective is to implement color matching that matches the color appearances of a colored image between color image devices that have greatly different reference white colors, by a reduced quantity of calculations.

However, this is color matching with white as the object, which differs from the concept of an appearance model that takes all colors as the object, and it is preferable to adopt an appearance model that has been established as a standard model, from the viewpoint of color reproduction accuracy.

### Disclosure of Invention

The present invention was devised in the light of the above-described technical problem, with the objective of providing an environment-compliant image display system, an information storage medium, and an image processing method that reduce the quantity of calculations required when an appearance model is used, making it possible to reproduce the color appearances of an image accurately and within a short time.
(1) In order to solve the above-described technical problem, an environment-compliant image display system in accordance with the present invention relates to an image display system which displays an image based on conversion information that is generated based on viewing environment information obtained by viewing environment detection means for detecting the viewing environment when an image display area is seen, and is used converting an image signal, the image display system comprising:
information generation means for generating the conversion information by performing a calculation that is based on an appearance model, in order to display an image that conforms to a reference standard, based on the viewing environment information and color information of the reference standard, the color information having predetermined standard environment information; and
image display means for converting the image signal, and displaying an image based on the generated conversion information.
(2) An information storage medium in accordance with the present invention relates to a computer-readable information storage medium which stores a program for displaying an image based on conversion information that is generated based on viewing environment information obtained by viewing environment detection means for detecting the viewing environment when an image display area is seen, and is used converting an image signal, the information storage medium storing a program for causing a computer to function as:
information generation means for generating the conversion information by performing a calculation that is based on an appearance model, in order to display an image that conforms to a reference standard, based on the viewing environment information and color information of the reference standard, the color information having predetermined standard environment information; and
means for converting the image signal, based on the generated conversion information, and causing an image display means to display an image.

The present invention makes it possible to detect the actual viewing environment and absorb any differences from a standard environment by calculations based on an appearance model, thus making it possible to reproduce color appearances in a suitable manner with respect to the actual viewing environment.

The present invention also makes it possible to convert an image signal without considering the type of device on the input side, since an image signal is converted as a target of reference standard colors. In other words, the conventional method considers the type of device on the input side. For that reason, if a high-precision appearance model were to be applied with the conventional method, the quantity of calculations and the time required for those calculations increase greatly, which is why this method is rarely adopted in the conventional art.

In contrast thereto, the present invention makes it possible to reduce the quantity of calculations and the calculation time, even when an appearance model is employed for converting an image signal by using reference standard colors as targets, thus enabling accurate reproduction of the color appearances in a short time.

Since the present invention uses a corresponding-color reproduction method for calculations based on an appearance model, instead of a colorimetric color reproduction method, it enables the conversion of an image signal with virtually no deterioration in the maximum luminance value that the image display means can reproduce.

Note that the appearance model (also called a color appearance model) may be an appearance model in accordance with CIECAM97s, RLAB, Von Kries, Bradford, CIELAB, Hunt, or the like, but an appearance model in accordance with CIECAM97s could be applied, by way of example. This is because the CIECAM97s appearance model is currently the most suitable method of enabling reproduction of the color appearances.

The reference standard that has this predetermined standard environment information is sRGB or the like, by way of example. If sRGB is used this case, by way of example, the standard environment information is information including appearance correlates that have been calculated under a standard environment.
(3) In this image display system and the information storage medium, the reference standard may be an sRGB standard,
the viewing environment information may include information indicating:
   XYZ values of adaptive white color in the viewing environment;
a luminance value of adaptive white color in the viewing environment;
XYZ values of a background in the viewing environment; and
a parameter that changes in accordance with luminance of the viewing environment,
the standard environment information may include information indicating an appearance correlate of a color appearance, and
the information generation means may include:
   corresponding-color generation means for generating corresponding-color information that indicates a corresponding color corresponding to a color in accordance with the sRGB standard in the viewing environment, based on the XYZ values of adaptive white color and the XYZ values of the background, the luminance value, the parameter, and the appearance correlate, by a calculation based on the appearance model;
   device color generation means for generating device color gamut information that indicates a color gamut that is reproducible by the image display means; and
   conversion information generation means for generating the conversion information, based on the corresponding-color information and the device color gamut information.

This enables appropriate reproduction of the color appearances within the sRGB standard, in the actual viewing environment.

Note that "adaptive white color" refers to the color of white in adapting field and "adapting field" refers to the field of view that supports adaptation.
(4) This image display system may be formed as a projector having:
the information generation means;
the image display means; and
means for generating a calibration image,
the image display means may project the generated calibration image in the display area, and
the viewing environment detection means may detect the viewing environment when the display area, in which the calibration image is displayed, is seen.

Since the calibration image is generated within the projector, this enables the projector to perform the calibration itself, without having input a calibration image from an external input device such as a PC.
(5) An image processing method in accordance with the present invention relates to an image processing method for an image display system which displays an image based on conversion information that is generated based on viewing environment information obtained by viewing environment detection means for detecting the viewing environment when an image display area is seen, and is used converting an image signal, the image processing method comprising:
acquiring the viewing environment information;
generating corresponding-color information that indicates a corresponding color that reproduces a color of a reference standard based on the acquired viewing environment information and color information of the reference standard, by performing a calculation based on an appearance model, the color information having predetermined standard environment information;
generating the conversion information, based on the obtained corresponding-color information and color gamut information indicating a color gamut that is reproducible by display means that displays the image; and
converting the image signal based on the generated conversion information.

The present invention makes it possible to display corresponding colors that reproduce the color appearances in a standard environment within the actual viewing environment, by obtaining corresponding colors in the actual viewing environment with respect to colors in a standard environment, generating conversion information that enables the reproduction of those corresponding colors, and using that conversion information to convert an image signal.
(6) This image processing method may include:
generating a calibration image before acquiring the viewing environment information;
displaying the generated calibration image in the display area; and
detecting the viewing environment for observing the display area in which the calibration image is displayed, and generating the viewing environment information.

Since the calibration image is generated within the display device, this enables the display device to perform the calibration itself, without having to input a calibration image from an external input device such as a PC.
(7) This image processing method may comprise:
projecting the calibration image by using a projector, and
projecting an image by using the projector based on the converted image signal.

Since the calibration image is generated within the projector, this enables the projector to perform the calibration itself, without having to input a calibration image from an external input device such as a PC.
(8) In this image display system, information storage medium and image processing method, the conversion information may include a look-up table.

This makes it possible to adjust the appearances of displayed colors, by correcting the look-up table. In particular, a three-dimensional look-up table may be used as this conversion information. This is because it favors color gamut mapping.

### Brief Description of Drawings

Fig. 1 is a schematic illustrative view of an image display system in accordance with an example of this embodiment.
Fig. 2 is a functional block diagram of the image processing section within a conventional projector.
Fig. 3 is a functional block diagram of the image processing section within a projector in accordance with an example of this embodiment.
Fig. 4 is a functional block diagram of the information generation section in accordance with an example of this embodiment.
Fig. 5 is a schematic view of a viewing field by the sRGB standard in IEC.
Fig. 6 is a flowchart of the sequence of image processing in accordance with an example of this embodiment.

### Best Mode for Carrying Out the Invention

An example in which the present invention is applied to an image display system that uses a liquid-crystal projector is described below, with reference to the accompanying drawings. Note that the embodiment described below does not limit the scope of the invention laid out herein. In addition, the entirety of the configuration described with reference to this embodiment is not limited to being essential to the means of solving the problem as laid out in the claims herein.

### Description of Overall System

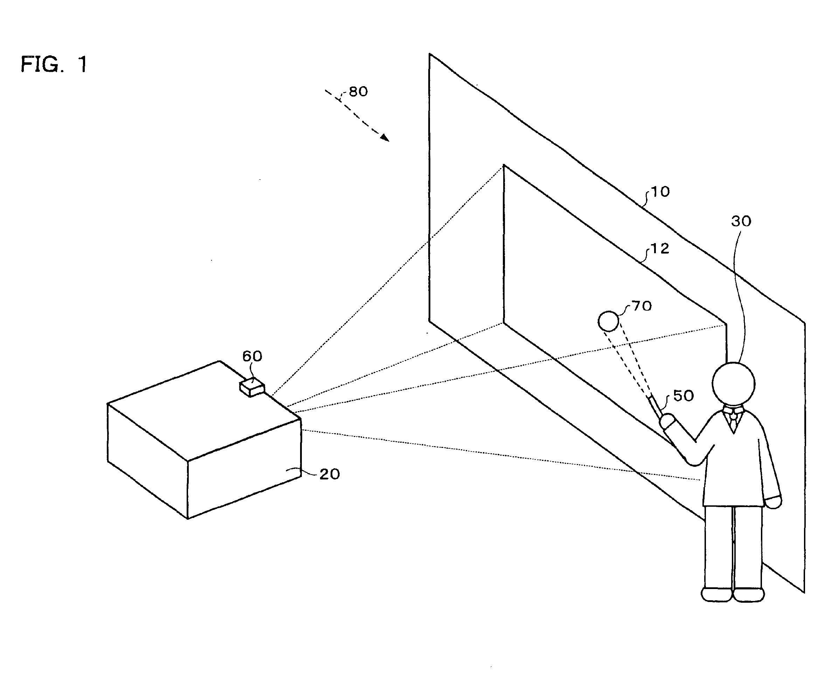

A schematic illustrative view shown in Fig. 1 is of an image display system in accordance with an example of this embodiment of the present invention.

A projector 20, which is a type of display device provided substantially facing a screen 10, projects an image for a predetermined presentation. A presenter 30 gives a presentation to an audience, while using a light spot 70 projected from a laser pointer 50 to point at a desired position of an image in an image display region 12, which is a display area on the screen 10.

During such a presentation, the image appearances on the image display region 12 will vary greatly, depending on ambient light 80. Even when the projector 20 displays the same white, for example, it could seem to be white with a yellow cast or white with a blue cast, depending on the type of the screen 10. Similarly, the display of the same white could seem to be a bright white or a dull white if the ambient light 80 differs.

Recently, this projector 20 has become smaller and easy to transport. For that reason, it has become possible to give presentations at a client's location, by way of example, but it is difficult to adjust colors to match the environment at the client's location and the manual adjustment of colors at the client's location takes too much time.

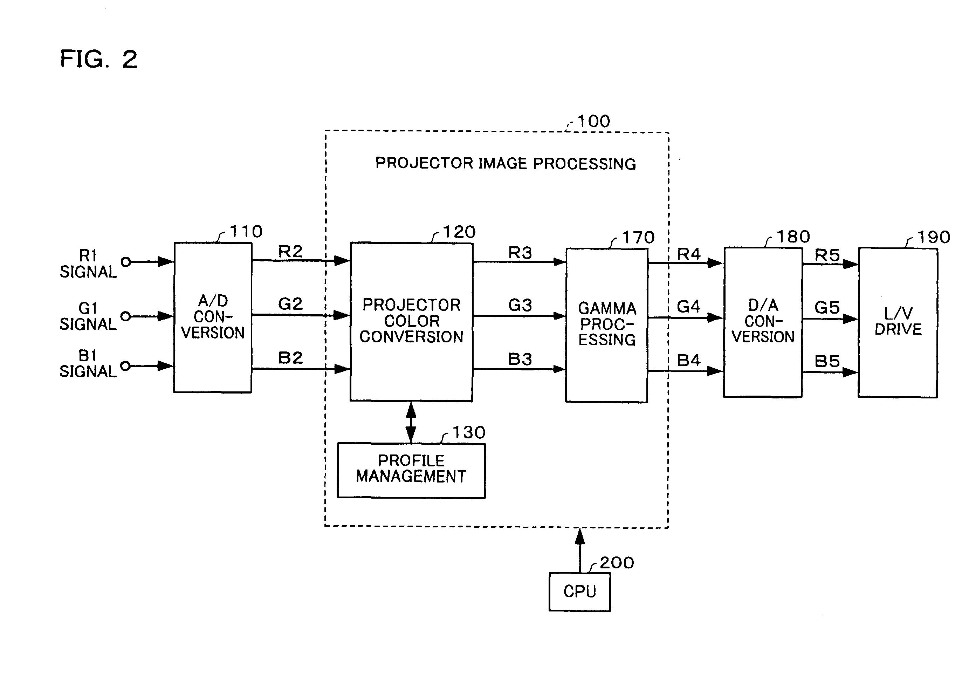

A functional block diagram of the image processing section within a conventional projector is shown in Fig. 2.

This conventional projector inputs an R1 signal, a G1 signal, and a B1 signal (which form RGB signals in analog form, sent from a PC or the like) to an A/D conversion section 110, and uses a projector image processing section 100 to perform color modification on an R2 signal, a G2 signal, and a B2 signal (which are in digital form).

The projector image processing section 100 performs gamma processing on an R3 signal, a G3 signal, and a B3 signal that are the result of the color conversion, then inputs an R4 signal, a G4 signal, and a B4 signal after the gamma processing to a D/A conversion section 180.

The D/A conversion section 180 outputs an R5 signal, a G5 signal, and a B5 signal (obtained by converting the R4 signal, G4 signal, and B4 signal into analog form) to a light valve (L/V) drive section 190, to drive liquid-crystal light valves and thus project an image.

The projector image processing section 100, which is controlled by a CPU 200, comprises a projector color conversion section 120, a profile management section 130, and a gamma processing section 170 that performs gamma processing.

The projector color conversion section 120 converts the RGB digital signals (the R2 signal, G2 signal, and B2 signal) from the A/D conversion section 110 into RGB digital signals for projector output (the R3 signal, G3 signal, and B3 signal) , based on a projector input-output profile that is managed by the profile management section 130. Note that "profile" in this case refers to characteristic data.

In this manner, the conventional projector can only perform color modification based on an input-output profile that indicates input-output characteristics that are specific to that particular projector, so no consideration is paid to the viewing environment in which the image is projected.

However, it is difficult to ensure that the color appearance of an image is uniform in this manner, without taking the viewing environment into account. The color appearance of an image is decided by three factors: light, the reflection or transmission of light by objects, and vision.

This embodiment implements an image display system that is capable of suitably reproducing the color appearance of an image, by detecting the viewing environment, taking into account the light and the reflection or transmission of that light by objects.

More specifically, the system is provided with a color-light sensor 60 that functions as viewing environment detection means for detecting the viewing environment, as shown in Fig. 1, where viewing environment information from the color-light sensor 60 is input to the projector 20. The color-light sensor 60 measures viewing environment information within and around the image display region 12 in the screen 10.

When observers stay in a predetermined viewing environment for a while, their eyes adapt to that viewing environment. This phenomenon is called adaptation. It is therefore necessary to consider not only changes in artificial light (changes in chromaticity due to changes in artificial light, or the like) but also overall changes including adaptation.

For that reason, the projector 20 is provided with information generation means for generating conversion information for converting the image signal used in image display, based on viewing environment information or the like from the color-light sensor 60.

With this embodiment of the invention, a 3D-LUT that is a type of conversion information is generated by a calculation method that uses a CIECAM97s appearance model, based on the viewing environment information and color information in sRGB, which is a reference standard, during the generation of conversion information by the information generation means.

In addition, the 3D-LUT is generated in a manner that enables the reproduction of corresponding colors corresponding to the sRGB colors in the actual viewing environment, enabling accurate reproduction of the color appearance of an image, by using that 3D-LUT for converting the image signal.

### Description of Functional Blocks

The description now turns to the functional blocks of the image processing section of the projector 20 that comprises this information generation means.

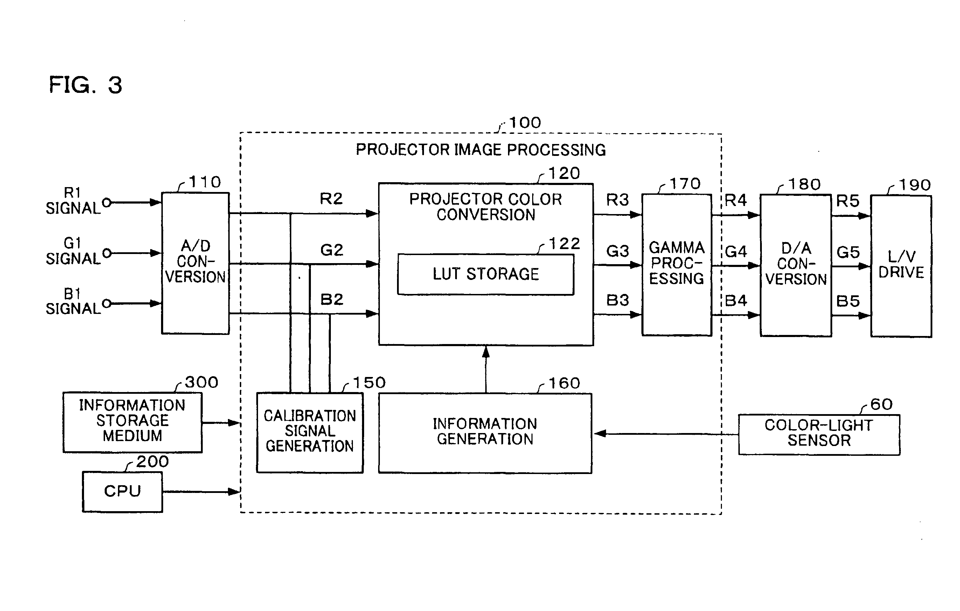

A functional block diagram of the image processing section within the projector 20 in accordance with an example of this embodiment is shown in Fig. 3.

The projector 20 inputs the R1 signal, G1 signal, and B1 signal (which form RGB signals in analog format, sent from a PC or the like) to the A/D conversion section 110, and the projector image processing section 100 controlled by the CPU 200 performs color conversion and gamma processing on the digital R2 signal, G2 signal, and B2 signal.

The R4 signal, G4 signal, and B4 signal that have been subjected to color conversion and gamma processing are input to the D/A conversion section 180, and the R5 signal, G5 signal, and B5 signal that are obtained by the analog conversion are input the L/V drive section 190 that is part of the image display means, to drive liquid-crystal light valves and thus project an image.

Up until this point, there is no difference from the configuration of the conventional projector. The projector image processing section 100 of the projector 20 in accordance with this embodiment comprises the projector color conversion section 120, an information generation section 160, an LUT storage section 122, a calibration signal generation section 150, and the gamma processing section 170.

The calibration signal generation section 150 generates a calibration image signal. This calibration image signal is input to the projector color conversion section 120 as an R2 signal, G2 signal, and B2 signal in digital form, in a similar manner to the outputs from the A/D conversion section 110.

The projector color conversion section 120 takes the RGB digital signals (the R2 signal, G2 signal, and B2 signal) from the calibration signal generation section 150 and converts them into RGB digital signals that are suitable for projector output (the R3 signal, G3 signal, B3 signal), with reference to a projector profile that is managed by the information generation section 160.

The projector color conversion section 120 is configured to comprise the LUT storage section 122 in which is stored an LUT that is part of the image conversion information.

More specifically, the LUT storage section 122 stores a three-dimensional look-up table (3D-LUT).

In addition, the projector image processing section 100 of this embodiment is also provided with the information generation section 160 that updates the 3D-LUT in the LUT storage section 122, based on factors such as the viewing environment information from the color-light sensor 60.

The description now turns to the functional blocks of the information generation section 160.

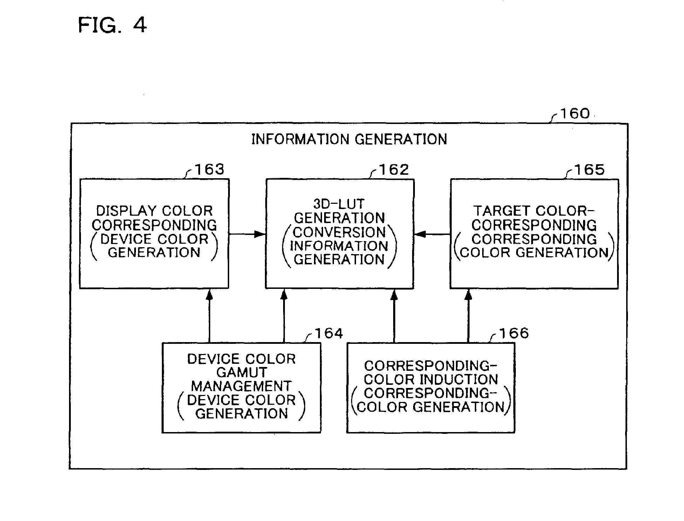

A functional block diagram of the information generation section 160 is shown in Fig. 4.

The information generation section 160 comprises a device color corresponding section 163 and a device color gamut management section 164 that function as device color generation means for generating device color gamut information that indicates the color gamut that can be reproduced by the projector 20. Note that correspondence section 163 and the device color gamut management section 164 are corresponding to the profile management section 130 of Fig. 2.

The information generation section 160 comprises a target-color corresponding section 165 and a corresponding-color induction section 166. The target-color corresponding section 165 and the corresponding-color induction section 166 perform calculations based on an appearance model to generate corresponding-color information, based on viewing environment information from the color-light sensor 60 and the appearance correlates of sRGB colors. In this case, corresponding-color information is information including colors that correspond to colors (corresponding colors) defined by the sRGB standard in the predetermined viewing environment. Note that the target-color corresponding section 165 and corresponding-color induction section 166 function as corresponding-color generation means.

The information generation section 160 comprises a 3D-LUT generation section 162 that functions as conversion information generation means for generating conversion information based on corresponding-color information and device color gamut information.

In this case, the device color gamut management section 164 stores a set of device color gamut information (Xj ; Yj, Zj, where j = 1 to n³) that is necessary during the generation of the 3D-LUT by the 3D-LUT generation section 162. The device color gamut management section 164 outputs that device color gamut information to the 3D-LUT generation section 162 and the device-color corresponding section 163.

On the other hand, the device-color corresponding section 163 generates RGB signals (Rj, Gj, Bj, where j = 1 to n³) , based on the device color gamut information from the device color gamut management section 164, and outputs it to the 3D-LUT generation section 162. Here, the device color gamut information (Xj, Yj, Zj) and the RGB signals (Rj, Gj, Bj) from the device-color corresponding section 163 are linked to each other.

The corresponding-color induction section 166 performs calculations based on the appearance model, from the appearance correlates of the sRGB colors (Ji, hi, Ci, where i = 1 to n³), the XYZ values (Xb, Yb, Zb) of the background under the viewing environment in which the screen 10 is set up in practice, the XYZ values (Xw, Yw, Zw) of the stimulus in that viewing environment, the luminance value (LA) of the stimulus in that viewing environment, and parameters (NC, c, FLL, F) in that viewing environment. This enables the corresponding-color induction section 166 to generate information indicating the colors that correspond to colors specified by the sRGB standard, in this viewing environment. In other words, the corresponding-color induction section 166 generates corresponding-color information (Xi, Yi, Zi, where i = 1 to n³). Note that the above-mentioned n is the number of lattice points along one side of the 3D-LUT. The above-mentioned parameters (NC, c, FLL, F) are parameters that change with the luminance of the surrounds.

The appearance correlates (Ji, hi, Ci) are numerical representations of the color appearances.

More specifically, the appearance correlate J (lightness) is an index of lightness, the appearance correlate h (hue angle) is an index of hue, and appearance correlate C (chroma) is an index of chroma. It is possible to regulate colors within the three-dimensional space by regulating their lightness, hue, and chroma in this manner.

A value that is 20% of the absolute value of the luminance of adaptive white color is used as the luminance value (LA) of the image.

Of the four parameters (NC, c, FLL, F), NC is a chromatic induction coefficient, c is a coefficient relating to the magnitude of the effect of the surroundings, FLL is a lightness contrast coefficient, and F is a coefficient indicating the degree of adaptation.

These parameters change in accordance with the viewing condition of the surround, such as to an average surround, dim surround, and dark surround. Note that the color-light sensor 60 stores a program for setting these values that vary with brightness, and obtains brightness-related parameters by calculation.

The above-mentioned stimulus, background, and surround will now be described.

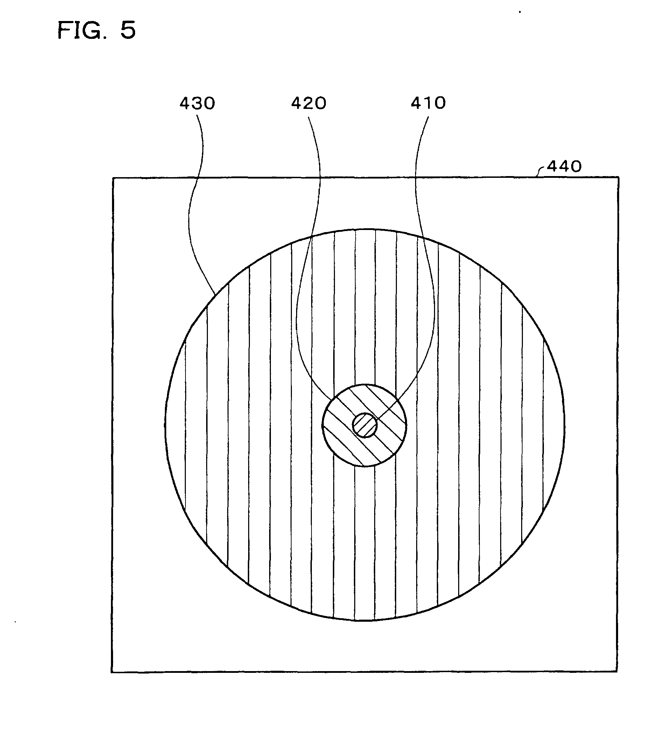

A schematic view of a viewing field by the sRGB standard in IEC is shown in Fig. 5.

The viewing field is formed of a stimulus 410, a proximal field 420, a background 430, and a surround 440.

The stimulus 410 corresponds to an area that covers two degrees of the field of view (two-degree field of view).

The proximal field 420 corresponds to an area that extends two degrees beyond the edge of the stimulus 410, outside the stimulus 410.

The background 430 corresponds to an area that extends ten degrees beyond the edge of the stimulus 410 (or the proximal field 420), outside the stimulus 410 and the proximal field 420.

The surround 440 corresponds to the area outside the background 430.

The corresponding-color induction section 166 outputs that corresponding-color information to the 3D-LUT generation section 162 and the target-color corresponding section 165.

The target-color corresponding section 165 generates corresponding-color RGB signals (Ri, Gi, Bi, where i = 1 to n³) , based on the corresponding-color information (Xi, Yi, Zi). Here, the corresponding-color information (Xi, Yi, Zi) and the RGB signals (Ri, Gi, Bi) from the target-color corresponding section 165 are linked to each other.

### Image Processing Flow

The description now turns to the flow of image processing. using these components and with reference to a flowchart.

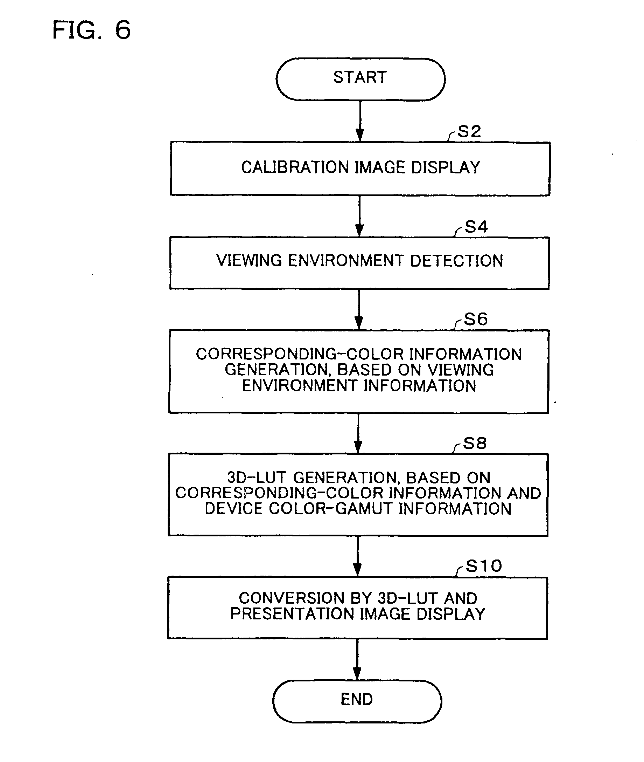

The flowchart shown in Fig. 6 is of the sequence of image processing in accordance with an example of this embodiment.

First of all, the projector 20 generates the calibration signals (R2, G2, B2) from the calibration signal generation section 150.

The calibration signal generation section 150 outputs those calibration signals to the projector color conversion section 120.

The projector color conversion section 120 uses a default (initial state) look up table to convert the calibration signals and outputs them as digital RGB signals (R3, G3, B3).

The gamma processing section 170 performs gamma processing (brightness adjustment) on the digital RGB signals (R3, G3, B3) , to convert them into digital RGB signals (R4, G4, B4).

The D/A conversion section 180 converts those digital RGB signals (R4, G4, B4) into analog RGB signals (R5, G5, B5). The L/V drive section 190 drives liquid crystal light valves on these analog RGB signals (R5, G5, B5) . The projector 20 projects a calibration image onto the image display region 12 (step S2) .

In the state in which the calibration image is displayed on the image display region 12, the color-light sensor 60 detects the XYZ values (Xb, Yb, Zb) of the background 430 of the image, the XYZ values (Xw, Yw, Zw) of the image (adaptive white color), and the luminance value (LA), as viewing environment information.

With this embodiment, the projector 20 projects each of a white image and a gray image, as calibration images. Note that the luminance of the gray image output by the projector 20 of this embodiment is substantially 20 percent of the luminance of the white image. The color-light sensor 60 measures the white image projected onto the screen 10, to detect the XYZ values thereof, and the gray image, to detect the XYZ values thereof. In this case, the XYZ values obtained by measuring the white image correspond to the XYZ values (Xw, Yw, Zw) of the stimulus 410. Similarly, the XYZ values obtained by measuring the gray image correspond to the XYZ values (Xb, Yb, Zb) of the background 430. In other words, it is possible to obtain XYZ values for the portion of the stimulus 410 in Fig. 5 by measuring the white image and it is possible to obtain XYZ values for the portion of the background 430 in Fig. 5 by measuring the gray image.

The color-light sensor 60 calculates the above-described four parameters (NC, c, FLL, F) in accordance with the brightness of the surround, as other viewing environment information.

The viewing environment is detected in that manner (step S4) .

The corresponding-color induction section 166 obtains corresponding-color information (Xi, Yi, Zi) by using a calculation method with a CIECAM97s appearance model, based on the viewing environment information from the color-light sensor 60 and the appearance correlates (step S6).

The target-color corresponding section 165 creates the corresponding-color RGB signals (Ri, Gi, Bi), based on the corresponding-color information (Xi, Yi, Zi).

The corresponding-color induction section 166 and the target-color corresponding section 165 output the corresponding-color information (Xi, Yi, Zi) and the RGB signals (Ri, Gi, Bi) to the 3D-LUT generation section 162.

Similarly, the device color gamut management section 164 and the device-color corresponding section 163 output the device color gamut information (Xj , Yj, Zj) and the RGB signals (Rj, Gj, Bj) to the 3D-LUT generation section 162.

The 3D-LUT generation section 162 converts the corresponding-color information (Xi, Yi, Zi) and device color gamut information (Xj, Yj, Zj) into the L*u*v* color coordinate system, to obtain color gamuts for the corresponding colors and the device, respectively.

The 3D-LUT generation section 162 also performs color gamut mapping (such as color gamut compression or color gamut expansion), based on each color gamut. In this manner, the 3D-LUT generation section 162 links the colors within the corresponding-color gamut to the colors within the device color gamut, and generates a 3D-LUT that enables those linkages within the LUT storage section 122 (step S8).

Note that since the corresponding-color information (Xi, Yi, Zi) and device color gamut information (Xj, Yj, Zj) are linked to the RGB signals (Ri, Gi, Bi) and the RGB signals (Rj, Gj, Bj), respectively, in practice, it is possible to convert the RGB signals on the input side (R2, G2, B2) to the RGB signal on the output side (R3, G3, B3) as appropriate, by using the thus-generated 3D-LUT.

The projector color conversion section 120 converts the image colors by using the 3D-LUT in the LUT storage section 122. The gamma processing section 170 subsequently adjust the brightness of the image, the D/A conversion section 180 converts the digital RGB signals (R4, G4, B4) that have been output from the gamma processing section 170 into analog RGB signals (R5, G5, B5) , and the L/V drive section 190 drives the liquid-crystal light valves.

By the above-described sequence, the projector 20 projects the presentation image (step S10).

As described above, this embodiment makes it possible to reproduce the color appearance of an image by means of a color appearance reproduction that obtains corresponding colors that can reproduce sRGB colors that are a reference standard, in the actual viewing environment.

Since the corresponding color takes into consideration the above-described overall changes, the corresponding colors enable suitable reproduction of the color appearances of an image, taking into account color adaptation as well.

In particular, it is possible to reproduce the color appearances of an image even more accurately, by adopting an appearance model under CIECAM97s, which currently enables the best reproduction capability.

Since sRGB colors are targeted and there is no need to consider the type of device on the input side, the quantity of calculations can be reduced, enabling high-speed processing.

In other words, it is necessary in the conventional art to obtain appearance correlates for each image, taking into consideration the environment on the input device side as well. For that reason, the quantity of calculations is large and image processing takes a long time.

Since this embodiment makes it possible to pre-load the projector 20 with a plurality of appearance of colors in accordance with reference standards such as sRGB, it is not necessary to obtain appearance correlates for each image, since the color appearance is normally constant on the input device side, enabling a reduction in the quantity of calculations and an increase in the processing speed.

Since this embodiment uses a corresponding-color reproduction method for calculations based on an appearance model, instead of a colorimetric color reproduction method, it enables the conversion of an image signal with virtually no deterioration in the maximum luminance value that the image display means can reproduce.

In other words, since a conventional projector has to match colors to colorimetric values that are the targets, it is necessary to greatly change the balance of default colors of the projector. For example, experiments performed by the present inventors have shown that if a conventional projector is used to convert a default white color (having RGB values of (255, 255, 255) and a luminance value of 1010 cd/m²) to conform to sRGB, the RGB values become (255, 210, 237) and the luminance value becomes 723 cd/m² in a predetermined environment, showing that the luminance value is greatly degraded. That is because accurate color reproduction with the colorimetric color reproduction method necessitates changes in the balance of RGB values. In this example, the RGB values change to (255, 210, 237), which are greatly different from the original values.

When the projector 20 of this embodiment was used to convert the image signal, the RGB values in the above-described predetermined environment are (240, 248, 255) and the luminance value is 949 cd/m², so there is virtually no deterioration of the luminance value and the RGB values are virtually unchanged. In this case, it is sufficient to leave the RGB values with little change because the corresponding-color reproduction method considers the adaptation of human eyes and enables accurate color reproduction even when the RGB are not changed.

In this manner, this embodiment makes it possible to convert an image signal with virtually no deterioration in the maximum luminance value that the projector 20 can reproduce.

With this embodiment, the image is projected from consideration of the viewing environment, by using the color-light sensor 60 to detect the viewing environment.

This makes it possible to display an image that is adjusted for the viewing environment in which the image is displayed, enabling display of the same image regardless of the environment, by absorbing differences in the display environment. It is therefore possible to reproduce substantially the same colors in a plurality of different locations, within a short time.

### Description of Hardware

Note that the hardware described below by way of example can be used to implement the above-described components.

For example, the A/D conversion section 110 could be implemented by an A/D converter or the like, the D/A conversion section 180 by a D/A converter or the like, the L/v drive section 190 by a liquid crystal light valve driver or the like, the projector color conversion section 120 and the information generation section 160 by image processing circuitry or an ASIC or the like, and the LUT storage section 122 by circuitry having a storage area such as RAM or the like. Note that these components could be implemented in a hardware fashion by circuitry, or they could be implemented in a software fashion by drivers.

In addition, the functions of the components shown in Fig. 3 could be implemented by reading out a program from an information storage medium 300. The information storage medium 300 could be a CD-ROM, DVD-ROM, ROM, RAM, or HDD, by way of example, and the method of reading the program therefrom could be a direct method or an indirect method.

Instead of the information storage medium 300, it is possible to implement the above-described functions by downloading a program that implements those functions, over a transfer path from a host device or the like. In other words, information for implementing the above-described functions could be embodied over carrier waves.

In addition, means such as a luminance sensor could be used as the color-light sensor 60.

### Modifications

The present invention is described above with reference to a preferred embodiment thereof, but the present invention is not limited to that embodiment and thus it can be modified in various ways.

For example, the appearance model is not limited to CIECAM97s and thus various other appearance models can be used therefor, such as those by RLAB, Von Kries, Bradford, CIELAB, or Hunt.

Note that factors such as the above-described appearance correlates and parameters vary slightly between different appearance models, but it is possible to use the color-light sensor 60 to acquire factors such as those parameters that match the model that is used in practice.

In the above-described example, the sequence of generating the calibration signal at the calibration signal generation section 150 for each predetermined grayscale is fixed, but it is also possible to adapt the present invention for a variable sequence.

In such a case, RGB values that are output as a calibration signal from the calibration signal generation section 150 could be stored in the device-color corresponding section 163 during the processing of step S2 in Fig. 6. The sequence of generating the calibration signal can be changed to various different sequences by outputting from the 3D-LUT generation section 162 RGB signals (Rj, Gj, Bj) that correspond to the device color gamut information (Xj, Yj, Zj) from the device color gamut management section 164, with reference to the RGB values stored in the device-color corresponding section 163, during the processing of step S8.

It is also possible to use a 1D-LUT instead of a 3D-LUT as the above-described conversion information for converting the image signal.

Imaging means such as a CCD camera or a CMOS camera could be used as the viewing environment detection means, instead of the color-light sensor 60, and the imaging data therefrom could be subjected to image processing to detect the viewing environment.

Note that the above-described screen 10 could be of a reflective type or a transmissive type. A screen that uses a hologram could also be used as the screen.

The present invention could also be applied to presentations involving image display by a display means other than the projection type of image display device of the above-described projector. Instead of a liquid-crystal projector, a projector using a cathode ray tube (CRT), a plasma display panel (PDP), a field emission display (FED) device, an electro-luminescence (EL) device, a direct-vision type of liquid crystal display device, or a digital micromirror device (DMD) could be used as such a display means. Note that DMD is a trademark registered to Texas Instruments Inc. of the USA. In addition, the projector is not limited to a front-projection type; it could equally well be a rear-projection type of projector.

Other than presentations, the present invention can be applied to image display in meetings, for medical treatment, in the design or fashion world, in business activities, commercials, and in education, as well as for general-purpose image displays such as movies, TV, video, and games.

Note that the functions of the above-described projector image processing section 100 of the projector 20 could be implemented by a single image display device (such as the projector 20 itself) or by distribution between a plurality of processing devices (such as distributed processing between the projector 20 and a PC).

In the above-described example, XYZ values (Xw, Yw, Zw) of the stimulus in the viewing environment and the luminance value (LA) of the stimulus in the viewing environment are used, but it is also possible to used values relating to an area that is not the specific area shown in Fig. 5.

The XYZ values (Xw, Yw, Zw) could be relative tristimulus values for white in accordance with adapting field and the luminance value (LA) could be the luminance value for white in accordance with adapting field (more specifically, 20% of that luminance value).

## Claims

1. An environment-compliant image display system which displays an image based on conversion information that is generated based on viewing environment information obtained by viewing environment detection means for detecting the viewing environment when an image display area is seen, and is used converting an image signal, the image display system comprising:
information generation means for generating the conversion information by performing a calculation that is based on an appearance model, in order to display an image that conforms to a reference standard, based on the viewing environment information and color information of the reference standard, the color information having predetermined standard environment information; and
image display means for converting the image signal, and displaying an image based on the generated conversion information.

2. The image display system as defined by claim 1,
wherein the reference standard is an sRGB standard,
wherein the viewing environment information comprises information indicating:
XYZ values of adaptive white color in the viewing environment;
a luminance value of adaptive white color in the viewing environment;
XYZ values of a background in the viewing environment; and
a parameter that changes in accordance with luminance of the viewing environment,
wherein the standard environment information comprises information indicating an appearance correlate of a color appearance, and
wherein the information generation means comprises:
corresponding-color generation means for generating corresponding-color information that indicates a corresponding color corresponding to a color in accordance with the sRGB standard in the viewing environment, based on the XYZ values of adaptive white color and the XYZ values of the background, the luminance value, the parameter, and the appearance correlate, by a calculation based on the appearance model;
device color generation means for generating device color gamut information that indicates a color gamut that is reproducible by the image display means; and
conversion information generation means for generating the conversion information, based on the corresponding-color information and the device color gamut information.

3. The image display system as defined by claim 1, being formed as a projector having:
the information generation means;
the image display means; and
means for generating a calibration image,
wherein the image display means projects the generated calibration image in the display area, and
wherein the viewing environment detection means detects the viewing environment when the display area, in which the calibration image is displayed, is seen.

4. The image display system as defined by claim 2, being formed as a projector having:
the information generation means;
the image display means; and
means for generating a calibration image,
wherein the image display means projects the generated calibration image in the display area, and
wherein the viewing environment detection means detects the viewing environment when the display area, in which the calibration image is displayed, is seen.

5. The image display system as defined by claim 1,
wherein the conversion information comprises a look-up table.

6. The image display system as defined by claim 2,
wherein the conversion information comprises a look-up table.

7. A computer-readable information storage medium which stores a program for displaying an image based on conversion information that is generated based on viewing environment information obtained by viewing environment detection means for detecting the viewing environment when an image display area is seen, and is used converting an image signal, the information storage medium storing a program for causing a computer to function as:
information generation means for generating the conversion information by performing a calculation that is based on an appearance model, in order to display an image that conforms to a reference standard, based on the viewing environment information and color information of the reference standard, the color information having predetermined standard environment information; and
means for converting the image signal, based on the generated conversion information, and causing an image display means to display an image.

8. The information storage medium as defined by claim 7,
wherein the reference standard is an sRGB standard,
wherein the viewing environment information comprises information indicating:
XYZ values of adaptive white color in the viewing environment;
a luminance value of adaptive white color in the viewing environment;
XYZ values of a background in the viewing environment; and
a parameter that changes in accordance with luminance of the viewing environment,
wherein the standard environment information comprises information indicating an appearance correlate of a color appearance, and
wherein the information generation means comprises:
corresponding-color generation means for generating corresponding-color information that indicates a corresponding color corresponding to a color in accordance with the sRGB standard in the viewing environment, based on the XYZ values of adaptive white color and the XYZ values of the background, the luminance value, the parameter, and the appearance correlate, by a calculation based on the appearance model;
device color generation means for generating device color gamut information that indicates a color gamut that is reproducible by the image display means; and
conversion information generation means for generating the conversion information, based on the corresponding-color information and the device color gamut information.

9. The information storage medium as defined by claim 7,
wherein the conversion information comprises a look-up table.

10. The information storage medium as defined by claim 8,
wherein the conversion information comprises a look-up table.

11. An image processing method for an image display system which displays an image based on conversion information that is generated based on viewing environment information obtained by viewing environment detection means for detecting the viewing environment when an image display area is seen, and is used converting an image signal, the image processing method comprising:
acquiring the viewing environment information;
generating corresponding-color information that indicates a corresponding color that reproduces a color of a reference standard based on the acquired viewing environment information and color information of the reference standard, by performing a calculation based on an appearance model, the color information having predetermined standard environment information;
generating the conversion information, based on the obtained corresponding-color information and color gamut information indicating a color gamut that is reproducible by display means that displays the image; and
converting the image signal based on the generated conversion information.

12. The image processing method as defined by claim 11, comprising:
generating a calibration image before acquiring the viewing environment information;
displaying the generated calibration image in the display area; and
detecting the viewing environment for observing the display area in which the calibration image is displayed, and generating the viewing environment information.

13. The image processing method as defined by claim 12, comprising:
projecting the calibration image by using a projector, and
projecting an image by using the projector based on the converted image signal.

14. The image processing method as defined by claim 11,
wherein the conversion information comprises a look-up table.

15. The image processing method as defined by claim 12,
wherein the conversion information comprises a look-up table.
